# EUROPEAN PATENT APPLICATION

(11) **EP 1 830 534 A1**
(43) Date of publication of application: **05.09.2007**
(21) Application number: 06300196.0
(22) Date of filing: 03.03.2006
(51) Int. Cl.: H04L 27/26, H04L 5/02

(54) **Active cancellation of inter-cell interference in a cellular wireless access system**

(71) Applicant: Alcatel Lucent, 75008 Paris (FR)
(72) Inventor: Münzner, Roland, Dr., 73266 Bissingen an der Teck (DE)
(74) Representative: Wetzel, Emmanuelle

(57) **Abstract**

The present invention relates to a method for improving inter cell interference cancellation in an cellular radio communication system, said cellular radio communication system sending OFDM frames on an air interface, each OFDM frame comprising a pilot tones part and a payload part comprising a plurality of bursts.

According to the present invention, the method comprising the step of:
Sending on a sub channel a first set of pilot tones by the station sending a burst on said sub channel;
Sending additionally in said frame and on said sub channel a second set of pilot tones by an additional station when a burst sent by said additional station starts on said sub channel.

## Description

### Background of the Invention

The present invention relates to method for performing active cancellation of inter-cell interference in a cellular radio communication system.

In cellular radio communication systems short frequency re-use distances provides for an optimisation of resource usage. Using short frequency re-use distance leads to a high amount of inter-cell interference which have to be coped with. Active cancellation of inter-cell interference is required to guaranty the efficiency of such high capacity networks based for example on OFDMA (Orthogonal Frequency Division Multiple Access) air interfaces.

Usual interference cancellation methods consisting in coordinating the resource allocation between different neighbour base stations in a manner that interference is minimized present the drawback to show a poor usage of the resources in the system and are not sufficient to provide a sufficient network capacity.

The trend in radio communication networks is however to reduce the frequency reuse distance to increase the capacity of the networks. This is especially a requirement for high density areas where the number of potential users may be very high so that the resource must be efficiently allocated. In such cases, interference occur between resources simultaneously allocated to several users in different cells as in systems being based on OFDM/OFDMA air interface.

OFDMA systems such as defined in IEEE 802.16e and at the WIMAX forum, and especially if they are equipped with beamforming technology (in which the multi antenna system is able to generate very directive beams adaptively following the moves of the user and in which active interference cancellation can be conducted through adaptively steering nulls in the antenna patterns into the directions of the strongest interfering signals) are preferably to be deployed with a short frequency reuse distance.

Active cancellation of inter-cell interference at the base station is eased by adaptive beamforming techniques - both for up-link as well as for down-link operation - and require a sufficient amount of OFDMA training tones, that need to be provided in the uplink by each subscriber station, in order to allow the base station to estimate the spatial signature of the desired signal and of the interfering signals.

Nevertheless, the standard OFDMA pilot tones, that are allocated with each uplink transmission in a given frequency and time domain are in most cases and for the sake of spectral efficiency of the system not available at a sufficiently high density for a precise enough estimation of the spatial signatures of desired and in particular of the interfering signals. For a better estimation of the spatial signature of the desired and the interfering signals, additional dedicated pilot tones are allocated, e.g. through dedicated preambles or sounding signals which in addition allow training for down-link transmission allocations. In general those additional dedicated pilot tones have to be coordinated between the cells of the system, that are susceptible to give raise to inter cell interference among each other, in an optimised way to allow for most efficient estimation of the spatial signatures and channel conditions for both the desired and the interfering signals.

The allocations of these additional dedicated pilot tones thereby have to fulfil several requirements exposed in the following:

Firstly, from a system or multi-cell perspective, the pilot tone allocations have to cover the entire inter-cell interference situation for the bursts, they are covering, even though the inter-cell interference situation is likely to change over a given transmission burst for which the interference from other cells has to be cancelled.

Secondly, radio resource scheduling for each individual cell ideally shall not be subject to any constraints emerging from the need of allocating the dedicated training pilot tones for inter-cell interference cancellation.

Thirdly, the required allocations for training pilot tones shall be optimised for allowing the best inter-cell interference cancellation possible at lowest amount of required pilot tones.

Standard solutions use the allocations of dedicated pilot tones in front of each up-link transmission for training the interference cancellation algorithms in up-link and equivalently use for each of the downlink transmissions allocations of dedicated pilot tones in a preceding up-link frame for training the interference cancellation algorithms in down-link. This type of allocation strategy is pre-scribed e.g. in IEEE 802.-16-2004 resp. IEEE 802.16e-2005 through the way AAS (Adaptive Antenna System) preambles are defined. These type of pilot tone allocations for training interference cancellation algorithms suffer from several drawbacks.

A limitation appears if no restrictions are employed on radio resource scheduling. Indeed, the training on this type of dedicated pilot tones will provide knowledge of the spatial signature of the interfering signals only for those transmissions within the interfering cells, that are starting at the same OFDM symbol. For any allocations in the interfering cells, that start on a later OFDM symbol, but still during the duration of the transmission of the burst of interest, no training of the interference cancellation algorithm on dedicated pilot tones is possible.

In order to solve this restriction and avoid the presence of inter-cell interference during the part of a given transmission of interest for which no training on dedicated pilot tones is available, either rather strong restrictions on scheduling have to be employed, e.g. all the transmissions have to span the entire part of the up-link frame they are allocated in and which has its boundaries on OFDM symbol granularity (those part of the frame are sometimes also called transmission zones), meaning that the OFDMA system is reduced to a mere FDMA approach, or significant overhead on the dedicated pilot tones is introduced.

As a consequence, in case no restrictions of scheduling can be employed, an OFDM symbol with dedicated pilot tones has to be introduced at the granularity of possible allocation start times in order to guarantee that all the inter-cell interference is covered through the dedicated pilot tones.

Conversely, in case the overhead from training pilot tones for inter-cell interference cancellation shall be kept low, the granularity of start time for OFDMA allocations has to be rather coarse, which imposes strong constraints on radio resource scheduling.

Thus, this standard way of allocating training sequences for active inter-cell interference cancellation does not meet the requirements stated above.

A particular object of the present invention is to provide for more flexible allocation strategies in systems with short frequency reuse distance thanks to a method for pilot tone allocations for interference cancellation avoiding the addressed drawbacks and meeting the requirements in term of highest freedom regarding the resource allocation constraints.

Another object of the present invention is to provide a corresponding subscriber station sending pilot tones in accordance with the method.

Another object of the invention is to provide a corresponding base station able to cope with the pilot tone scheme foreseen in the method of the present invention.

### Summary of the Invention

These objects, and others that appear below, are achieved by a method for improving inter cell interference cancellation in an cellular radio communication system according to claim 1, a subscriber station according to claim 10, and a base station according to claim 13.

According to the present invention and considering the uplink transmission direction, when a first burst belonging to a first subscriber station is sent on a sub channel and additionally a second burst from a second subscriber station starts on the same sub channel before the end of the time slot of the up-link frame they are allocated in, a pilot tone from the first subscriber station and additionally a pilot tone from the second subscriber station are sent on the this sub channel. The method can be applied similarly to the downlink transmission direction.

The method according to the present invention presents the advantage to provides a strategy for allocating dedicated pilot tones for the purpose of inter-cell interference cancellation which jointly provides for low overhead of training tone allocations while providing covering of the inter-cell interference situation during the whole of the duration of the transmission allocations.

Another advantage of the present invention consists in requiring no or very low restrictions on radio resource scheduling at each individual base station.

Further advantageous features of the invention are defined in the dependent claims.

### Brief Description of the Drawings

Other characteristics and advantages of the invention will appear on reading the following description of a preferred embodiment given by the way of non-limiting illustrations, and from the accompanying drawings, in which:
- Figures 1 a, 1 b show a pilot tone arrangement according to a first embodiment of the present invention;
- Figures 2a, 2b show a pilot tone arrangement according to a second embodiment of the present invention;
- Figures 3a, 3b show a pilot tone arrangement according to a third embodiment of the present invention;
- Figures 4a, 4b show a pilot tone arrangement according to a fourth embodiment of the present invention;
- Figure 5 shows a base station implementing the method according to the present invention;
- Figure 6 shows a subscriber station implementing the method according to the present invention.

### Detailed Description of the Invention

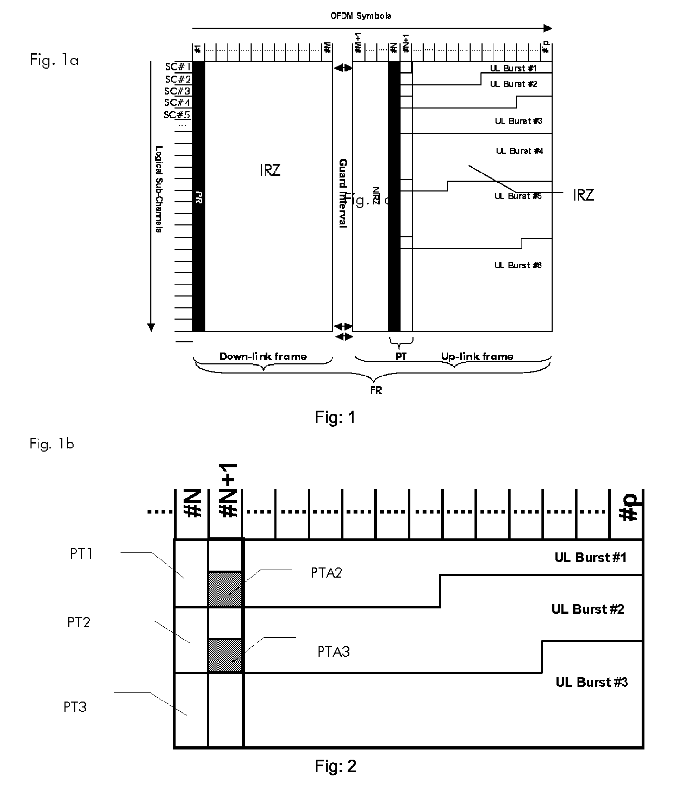

Figure 1a shows a pilot tone arrangement according to a first embodiment of the present invention. This embodiment is illustrated using a multi channel communication network employing OFDMA as technology on each sub-channels. OFMDA allows resource allocations in frequency domain and in the time domain where orthogonality of the resource elements in frequency domain, the so-called sub-carriers, allows for a narrow spacing of the latter ones and thus and efficient usage of the frequency resource. A burst which is destined to an end user comprises consequently a frequency extension and a time extension. In this context, a frame comprises bursts which themselves are constituted of OFDM symbols sent on the different sub-channels.

In this embodiment of the invention, the radio communication system is a TDD (Time Division Duplex) system so that first a downlink frame is sent followed by an uplink frame. A person skilled in the art would nevertheless have no difficulty to map the present invention on other type of radio communication networks using FDD (Frequency Division Duplex).

A frame FR to be transferred in a radio communication network is comprising a guard interval between the down-link and the up-link part as well as in the uplink part of it, a part where no active interference cancellation NIRZ is performed on, a part for pilot tones PT and a plurality of bursts UL Burst#1,.., UL Burst#6 on which active interference cancellation is performed.

Each burst comprises information related to one end user. The preamble comprise pilot tones which are not dedicated to interference cancellation. It will be clear for those skilled in the art that the invention only concerns the pilot tones part of the frame dedicated for interference cancellation but not the payload part, the guard interval, or the part for which no active interference cancellation is performed, the latter part comprising possibly payload data, so that the invention may apply even if one or several of these parts are missing or containing other type of information.

The present invention will be illustrated using figure 1 b which shows a detail of Figure 1a, a first OFDM symbol (symbol #N) is provided for allocating dedicated pilot tones according to all the transmissions that start at the beginning of the part of the frame under consideration (which the up-link in the given example, where it will be clear for those skilled in the art that the method could be equivalently applied to the down-link frame) for a basic training of the interference cancellation algorithm.

For every additional allocation, that can start during the duration of the part of the frame under consideration, an additional OFDM symbol (symbol #N+1) is provided to allocate additional pilot tones for a refined training of the inter-cell interference cancellation algorithm. Thereby the pilot tones are provided only on the sub channels on which a second transmission starts during the part of the frame under consideration.

The number of maximum allocations of data transmissions, that can start during the duration of a single part of the frame is set to a fixed number (or is subject to a slow change which is synchronized over the network). The number of OFDM symbols provided for allocations of dedicated pilot tones for training of inter-cell interference cancellation is preferably restricted to this number.

Each allocation in frequency domain of pilot tones for a given transmission thereby fully corresponds to the allocation in frequency domain of the data transmission, it is allocated for.

In case the number of allocations for data transmissions on a given OFDM tone, that are starting during the frame under consideration is lower than the maximum number of possible allocations starting on a single tone per part of the frame, then no pilot tones are allocated in those OFDM symbols, that correspond to allocations of data transmissions higher than the number of actually occurring starts of data transmissions on the given tone during the frame under consideration.

We will detail an example of the described allocation strategy for dedicated pilot tones for inter-cell interference cancellation for the specific case on an OFDMA up-link frame with a maximum of two pilot tones allocations starting during a single up-link frame.

The uplink part of the frame comprises 6 uplink bursts. UL burst #1, ..., UL burst#6 are extending in the time domain over the same amount of OFDM symbols and extending in the frequency domain over several sub channels.

OFDM symbol #N is dedicated to comprise a set of pilot tones sent by the subscriber station transmitting the burst which is currently sent on the corresponding sub-channel. For example, on sub channel SC#1 and SC#2 the pilot tone PT1 comprised in the OFDM symbol N is the pilot tone from the subscriber station transmitting UL burst#1.

UL burst #1 do not occupy the whole time slot on frequency SC#2 and the scheduler has scheduled UL burst #2 directly after the end of UL burst #1 on SC#2.

According to the present invention, and in order for being able to apply interference cancellation immediately at the beginning of UL burst #2, the subscriber station transmitting UL burst #2 sends a pilot tone PTA2 on symbol #N+1 of Sub channel SC#2 of the pilot tone part of the uplink frame.

UL burst #2 will extend over sub channels SC#3 and part of SC#4, so that pilot tones PT2 are sent by the subscriber station sending UL Burst#2 on symbol #N.

Similarly, UL burst #2 do not occupy the whole time slot on frequency SC#4 and the scheduler has scheduled UL burst #3 directly after the end of UL burst #2 on SC#4. According to the present invention, and in order for being able to apply interference cancellation immediately at the beginning of UL burst #3, the subscriber station transmitting UL burst #3 sends a pilot tone PTA3 on symbol #N+1 of Sub channel SC#4 of the pilot tone part.

Note that even in this case - being drawn from the principles of frame structure and sounding zone allocations of IEEE 802.16e-2005 - the overhead of OFDM symbols for training the inter-cell interference cancellation algorithm is 2 instead of 4 when one OFDM symbol has to be reserved for training at the granularity of possible start times for subsequent allocations, being 3 OFDM symbols in this particular case.

It will be clear to the person skilled in the art that the method according to the present invention similarly applies to the downlink part of the frame even if it has not been illustrated on the figures. For the downlink direction, the additional pilot tones have to be sent by the subscriber station which will receive the burst starting at a later OFDM symbol in the time slot of the subsequent down-link frame. According to the training provided to the interference cancellation algorithm of a base station equipped with adaptive beamforming technology the base station will then employ an adaptive beam pattern with appropriate null steering to each of bursts in the subsequent down-link frame.

It will further be clear to the person skilled in the art that roles of base stations and subscriber stations in the present invention can be interchanged, concerning the provisioning and usage of dedicated pilot tones for adaptive inter cell interference cancellation, in case processing for interference cancellation is provided also at the subscriber station.

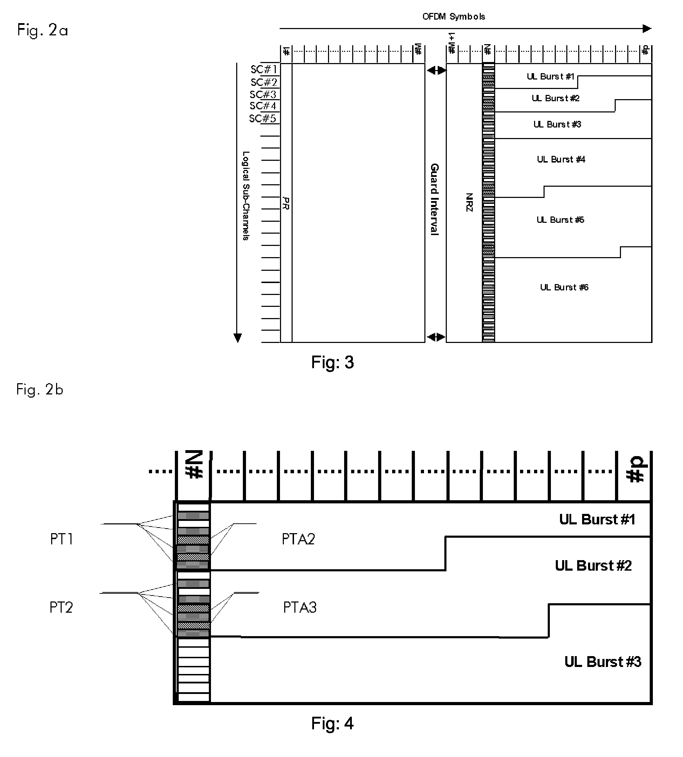

Figure 2a shows a pilot tone arrangement according to a second embodiment of the present invention. According to this second embodiment of the present invention, the pilot tone allocation strategy consists in using subsets of the total set of OFDM tones instead of additional OFDM symbols to include all pilot tones in the frame as foreseen by the present invention for training the inter-cell interference cancellation algorithm.

Thereby, a first subset of the pilot tones from the first subscriber station is included in OFDM symbol #N and superposed in OFDM symbol #N with a second subset of the pilot tones from the second subscriber station.

The sub set may be built the following way: A sub channel comprises a predefined number of sub carriers, so that set of a pilot tones to be transmitted is spread on a given number of sub carriers and thus contains several frequency components after IFFT (Inverse Fast Fourier Transformation). According to this embodiment of the present invention, the subset would only comprise the result of the IFFT on the frequencies of the even sub carriers for the dedicated pilot tones on the first OFDM symbol #N according to the first embodiment of the invention and the result of the IFFT on the frequencies of the odd sub carriers for the dedicated pilot tones on the second OFDM symbol #N+1 according to the first embodiment of the invention.

It will be clear for a person skilled in the art that the definition of the sub sets may be another one as the one previously proposed.

It will be also clear for a person skilled in the art that the second embodiment of the invention provides a multiplexing of the pilot tone allocations on the OFDM symbols #N and #N+1 of the first embodiment of the invention onto a single OFDM symbol by employing orthogonal subsets of sub carriers. It thereby will be clear for a person skilled in the art that the method for multiplexing of the pilot tone allocations on the OFDM symbols #N and #N+1 of the first embodiment of the invention onto a single OFDM symbol is not restricted to employing orthogonal subsets of sub-carriers, but other methods for generating orthogonality between sets of pilot tones can be used, as e.g. employing cyclic frequency shifting on each of the set of pilot tones where the multiplexed allocations are distinguished through the amount of frequency shift being applied to them.

This will be detailed thanks to figure 2b. UL burst #1 do not occupy the whole time slot on frequency SC#2 and the scheduler has scheduled UL burst #2 directly after the end of UL burst #1 on SC#2.

According to the present invention, and in order for being able to apply interference cancellation immediately at the beginning of UL burst #2, the subscriber station transmitting UL burst #2 sends a pilot tone subset PTA2 on symbol #N of Sub channel SC#2 of the pilot tone part while the subscriber station transmitting UL burst #1 sends a pilot tone subset PT1 on the same symbol #N of Sub channels SC#1 and SC#2.

Similarly, UL burst #2 do not occupy the whole time slot on frequency SC#4 and the scheduler has scheduled UL burst #3 directly after the end of UL burst #2 on SC#4. According to the present invention, and in order for being able to apply interference cancellation immediately at the beginning of UL burst #3, the subscriber station transmitting UL burst #3 sends a pilot tone PTA3 on symbol #N of Sub channel SC#4 of the pilot tone part while the subscriber station transmitting UL burst #2 sends a pilot tone subset PT2 on the same symbol #N of Sub channels SC#3 and SC#4.

It will also be clear for a person skilled in the art that this embodiment is not restricted to one additional burst starting on the same sub channel as a previous transmitted burst.

In this second embodiment, the amount of OFDM symbols used for training purpose is reduced at the expense of having a lower number of training tones available.

For this second embodiment, an equivalent mechanism can be used in the downlink direction where the subscriber stations are providing dedicated pilot tones on allocations corresponding to the down-link allocations of the subsequent down-link frame on which they will receive payload data. Using these pilot tones for adaptive processing the base station, equipped with beamforming technology, will then form adaptive beam patterns for each down-link allocation in order to minimize the inter cell interference through appropriate null steering.

Further for this second embodiment, the same mechanism can be used in the downlink direction so that a base station may use the method according to the present invention when sending data in the downlink and processing for interference cancellation is provided by the subscriber station.

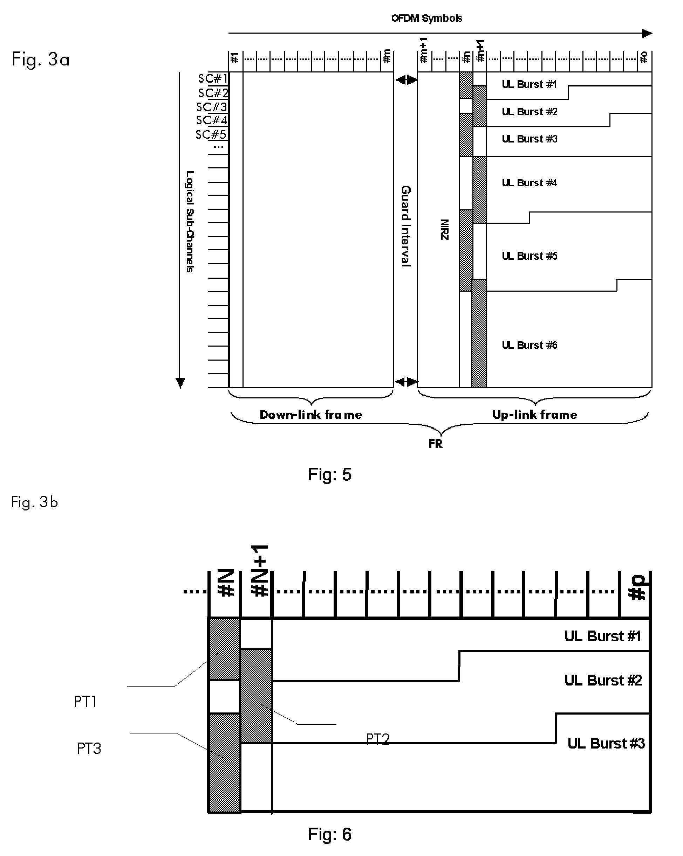

Figure 3a shows a pilot tone arrangement according to a third embodiment of the present invention. The present invention will be illustrated using Figure 3b which shows a detail of Figure 3a, a first OFDM symbol (symbol #N) is provided for allocating dedicated pilot tones according to all the first, the third, the fifth, ... , i.e. according to all odd numbered transmissions of the part of the frame under consideration (which the up-link in the given example, where it will be clear for those skilled in the art that the method could be equivalently applied to the down-link frame) for training of the interference cancellation algorithm.

For every second, fourth, sixth, ... i.e. every even numbered allocation of the part of the frame under consideration, an additional OFDM symbol (symbol #N+1) is provided to allocate pilot tones for training of the inter-cell interference cancellation algorithm.

The number of maximum allocations of data transmissions, that can start during the duration of a single part of the frame is set to two in this example. For a person skilled in the art it will be clear that this number can take other fixed values while the number of OFDM symbols for piot allocations then has to be increased accordingly as well as the decimation of the pilot tone allocations across the OFDM symbols.

Each allocation in frequency domain of pilot tones for a given transmission thereby fully corresponds to the allocation in frequency domain of the data transmission, it is allocated for.

According to this third embodiment of the present invention, the pilot tone allocation strategy consists in using as in the first embodiment 2 OFDM symbols but to keep the same OFDM symbol for the pilot tone transmission during the whole burst duration so that symbol #N+1 is no more reserved for pilot tone transmission of burst beginning in the middle of the frame.

This will be detailed using figure 3b. UL burst #1 do not occupy the whole time slot on frequency SC#2 and the scheduler has scheduled UL burst #2 directly after the end of UL burst #1 on SC#2.

According to the present invention, and in order for being able to apply interference cancellation immediately at the beginning of UL burst #2, the subscriber station transmitting UL burst #2 sends a pilot tone subset PT2 on symbol #N+1 of Sub channel SC#2 of the pilot tone part while the subscriber station transmitting UL burst #1 sends a pilot tone subset PT1 on symbol #N of Sub channels SC#1 and SC#2. UL burst #2 extends over sub channels SC#3, SC#4. According to this embodiment of the present invention, subscriber station transmitting UL burst #2 continue sending its pilot tone PT2 on symbol #N+1 of Sub channels SC#3 and SC#4.

Similarly, UL burst #2 do not occupy the whole time slot on frequency SC#4 and the scheduler has scheduled UL burst #3 directly after the end of UL burst #2 on SC#4. According to the present invention, and in order for being able to apply interference cancellation immediately at the beginning of UL burst #3, the subscriber station transmitting UL burst #3 sends a pilot tone PT3 on symbol #N of Sub channel SC#4 of the pilot tone part and will continue sending its pilot tones on symbol #N for the whole frequency extension of burst UL Burst #3.

Consequently, OFDM symbol #N is dedicated to comprise the sets of pilot tones sent by the subscriber stations transmitting the UL bursts #1, #3 and #5. For example, on sub channels SC#1 and SC#2 the pilot tones comprised in the OFDM symbol #N are the pilot tones from the subscriber station transmitting UL burst#1.

OFDM symbol #N+1 is dedicated to comprise the sets of pilot tones sent by the subscriber stations transmitting the UL bursts #2, #4 and #6. For example, on sub channels SC#2, SC#3 and SC#4 the pilot tones comprised in the OFDM symbol #N+1 are the pilot tones from the subscriber station transmitting UL burst#2.

Note that even in this case - being drawn from the principles of frame structure and sounding zone allocations of IEEE 802.16e-2005 - the overhead of OFDM symbols for training the inter-cell interference cancellation algorithm is 2 instead of 4 when one OFDM symbol has to be reserved for training at the granularity of possible start times for subsequent allocations, being 3 OFDM symbols in this particular case.

It will be clear to the person skilled in the art that the method according to the present invention similarly applies to the downlink part of the frame even if it has not been illustrated on the figures. For the downlink direction, the pilot tones have to be sent by the subscriber stations which will receive the bursts in the time slot of the subsequent down-link frame. According to the training provided to the interference cancellation algorithm of a base station equipped with adaptive beamforming technology the base station will then employ an adaptive beam pattern with appropriate null steering to each of bursts in the subsequent down-link frame.

It will further be clear to the person skilled in the art that roles of base stations and subscriber stations in the present invention can be interchanged, concerning the provisioning and usage of dedicated pilot tones for adaptive inter cell interference cancellation, in case processing for interference cancellation is provided also at the subscriber station.

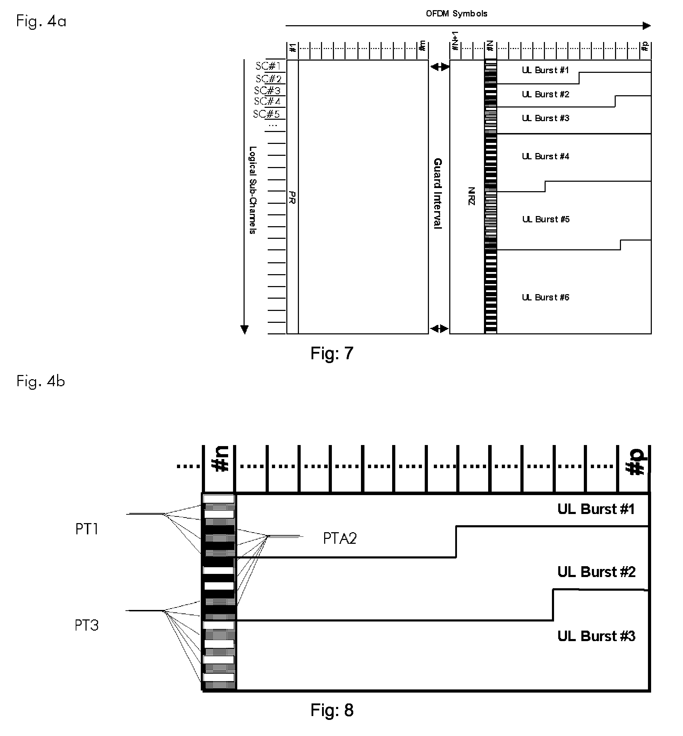

Figure 4a shows a pilot tone arrangement according to a fourth embodiment of the present invention. According to this fourth embodiment of the present invention, the pilot tone allocation strategy consists in using subsets of the total set of OFDM tones instead of additional OFDM symbols to include all pilot tones in the frame as foreseen by the present invention for training the inter-cell interference cancellation algorithm.

Thereby, a first subset of the pilot tones from the first subscriber station is included in OFDM symbol #N and superposed in OFDM symbol #N with a second subset of the pilot tones from the second subscriber station.

The sub set may be built the following way: A sub channel comprises a predefined number of sub carriers, so that the set of a pilot tones to be transmitted is spread on a given number of sub carriers and thus contains several frequency components after IFFT (Inverse Fast Fourier Transformation). According to this embodiment of the present invention, the subset would only comprise the result of the IFFT on the frequencies of the even sub carriers for the dedicated pilot tones on the first OFDM symbol #N according to the third embodiment of the invention and the result of the IFFT on the frequencies of the odd sub carriers for the dedicated pilot tones on the second OFDM symbol #N+1 according to the third embodiment of the invention.

It will be clear for a person skilled in the art that the definition of the sub sets may be another one as the one previously proposed.

It will be also clear for a person skilled in the art that the second embodiment of the invention provides a multiplexing of the pilot tone allocations on the OFDM symbols #N and #N+1 of the third embodiment of the invention onto a single OFDM symbol by employing orthogonal subsets of sub carriers. It thereby will be clear for a person skilled in the art that the method for multiplexing of the pilot tone allocations on the OFDM symbols #N and #N+1 of the third embodiment of the invention onto a single OFDM symbol is not restricted to employing orthogonal subsets of sub-carriers, but other methods for generating orthogonality between sets of pilot tones can be used, as e.g. employing cyclic frequency shifting on each of the set of pilot tones where the multiplexed allocations are distinguished through the amount of frequency shift being applied to them.

It will also be clear for a person skilled in the art that this embodiment is not restricted to one additional burst starting on the same sub channel as a previous transmitted burst.

In this fourth embodiment, the amount of OFDM symbols used for training purpose is reduced at the expense of having a lower number of training tones available.

For this fourth embodiment, an equivalent mechanism can be used in the downlink direction where the subscriber stations are providing dedicated pilot tones on allocations corresponding to the down-link allocations of the subsequent down-link frame on which they will receive payload data. Using these pilot tones for adaptive processing the base station, equipped with beamforming technology, will then form adaptive beam patterns for each down-link allocation in order to minimize the inter cell interference through appropriate null steering.

Further for this fourth embodiment, the same mechanism can be used in the downlink direction so that a base station may use the method according to the present invention when sending data in the downlink and processing for interference cancellation is provided by the subscriber station.

According to a further embodiment of the present invention, the principle of this invention may be used to comply with the requirement of IEEE 802.16e mandating a minimum length of the sounding zones of 3 OFDM symbols. According to this, 2 OFDM symbols of the sounding zone are used according to the first embodiment or to the third embodiment, the third symbol in the sounding zone is used in order to get a broadband frequency response from numerous of the currently active subscriber stations in the cell in order to do adaptive sub carrier (or better adaptive sub-band) allocation which is the original purpose of a sounding zone. Each subscriber thereby is using a subset of the OFDM tones for its sounding transmission, the subsets are built the same way as described in connection with Figure 2.

A further embodiment would combine the first or third described embodiment, preferably for the up-link which requires higher precision in the interference cancellation with the second or fourth described embodiment preferably for the down-link where a lower precision of interference cancellation can be tolerated in order to accomplish training for inter-cell interference cancellation for up-link and down-link within a single up-link sounding zone of the length of 3 OFDM symbols.

Thereby the first OFDM symbol (#N) of the sounding zone would be replaced by the OFDM training symbol of Figure 2 symbol #N or of Figure 4 symbol #N, having the dedicated pilot tones for training of interference cancellation allocated according to the allocations of the down-link transmissions of the subsequent frame, and the second and third OFDM symbols #N+1 and#N+2 will be replaced by the OFDM training symbol of Figure 1 or of Figure 3, having the dedicated pilot tones for training of interference cancellation allocated according to the allocations of the up-link transmissions of the present or a subsequent frame.

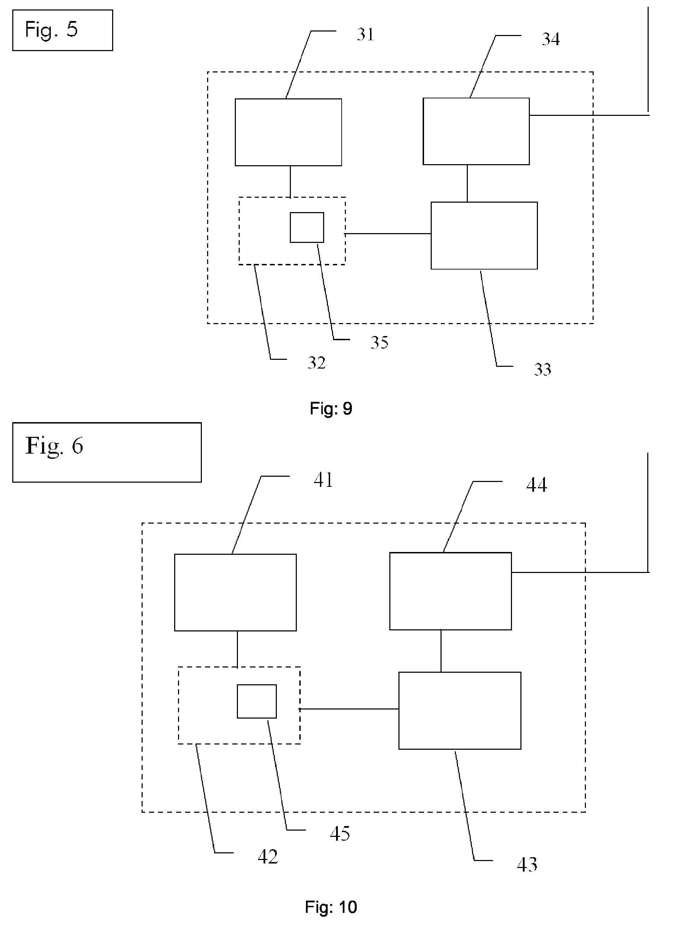

Figure 5 shows a base station implementing the method according to the present invention. A base station according to the present invention comprises a Layer 3 module 31 linked to a layer 2 module 32, linked to a physical layer module 33, itself linked to a Radio Frequency module 34. Layer 3 module implement a transport protocol as IP or ATM and make payload data available for layer 2 module 32 for downlink transmission or extract payload data out of the frame received at Layer 2 module 32 in the uplink direction.

Layer 2 Module 32 comprises a scheduler (or resource allocation module) 35 comprising means for implementing the method according to the present invention. In the downlink direction, the scheduler comprises means for building the frames by generating a frame header and scheduling the payload data from layer 3 Module 31 as bursts in the frame. Similarly, in the uplink direction, the scheduler comprises means for extracting the bursts out of a frame knowing the scheduling algorithm which was used for scheduling the bursts in the frame.

According to the present invention, scheduler 35 cooperates with means for detecting if the first symbol of the burst on a given sub-channel does not fall on the first symbol reserved for payload transmission;

Resource allocation module 35, then comprises means for directing reception of a set of predefined pilot tones through the physical layer 33 in a predefined symbol of said sub channel when the first symbol of the burst on a given sub-channel falls on the first symbol reserved for payload transmission.

Resource allocation module 35, further comprises means for directing reception of a set of predefined pilot tones through the physical layer 33 in a predefined symbol of said sub channel when the first symbol of the burst on a given sub-channel does not fall on the first symbol reserved for payload transmission.

Resource allocation module 35, further comprises means for directing subscriber stations to send a set of predefined pilot tones in a predefined symbol of said sub channel when the first symbol of the burst on a given sub-channel falls on the first symbol reserved for payload transmission.

Resource allocation module 35, further comprises means for directing subscriber stations to send a set of predefined pilot tones in a predefined symbol of said sub channel when the first symbol of the burst on a given sub-channel does not fall on the first symbol reserved for payload transmission.

Resource allocation module 35, may also comprise means for sending in a predefined symbol of said sub channel a set of predefined pilot tones when the first symbol of the burst on a given sub-channel falls on the first symbol reserved for payload transmission.

Resource allocation module 35, may further comprise means for sending in a predefined symbol of said sub channel a set of predefined pilot tones when the first symbol of the burst on a given sub-channel does not fall on the first symbol reserved for payload transmission.

Layer 2 module 32 is then connected to physical layer 33 in which functionalities as beamforming, modulation/demodulation, Forward Error Correction are implemented.

Further, physical layer 33 is connected to the Radio Frequency part of the base station comprising a up/down converter an a amplifier linked to an antenna.

Figure 6 shows a subscriber station implementing the method according to the present invention.

A subscriber station according to the present invention comprises a Layer 3 module 41 linked to a layer 2 module 42, linked to a physical layer module 43, itself linked to a Radio Frequency module 44. Layer 3 module 41 implement a transport protocol as IP or ATM and make payload data available for layer 2 module 42 for downlink transmission or extract payload data out of the frame received at Layer 2 module 42 in the uplink direction.

Layer 2 Module 42 comprises a scheduler 45 comprising means for implementing the method according to the present invention. In the uplink direction, the scheduler comprises means for building the frames by generating a frame header and scheduling the payload data from layer 3 Module 41 as bursts in the frame. This may thereby be accomplished under direction of the base station, e.g. through so called up-link maps. Similarly, in the down-link direction, the scheduler comprises means for extracting the bursts out of a frame knowing the scheduling algorithm which was used for scheduling the bursts in the frame or under direction of the base station, e.g. through so called down-link maps.

According to the present invention, scheduler 45 cooperates with means for detecting if the first symbol of the burst on a given sub-channel does not fall on the first symbol reserved for payload transmission.

Resource allocation module 45, then comprises means for sending in a predefined symbol of said sub channel a set of pilot tones when the first symbol of the burst on a given sub-channel falls on the first symbol reserved for payload transmission. These transmission may be carried out under direction of the base station, e.g. through so called up-link maps.

Resource allocation module 45, further comprises means for sending in a predefined symbol of said sub channel a pilot tone when the first symbol of the burst on a given sub-channel does not fall on the first symbol reserved for payload transmission. These transmission may be carried out under direction of the base station, e.g. through so called up-link maps.

Resource allocation module 45, may comprise means for directing reception of a set of predefined pilot tones through the physical layer 43 in a predefined symbol of said sub channel when the first symbol of the burst on a given sub-channel falls on the first symbol reserved for payload transmission.

Resource allocation module 45, may further comprise means for directing reception of a set of predefined pilot tones through the physical layer 33 in a predefined symbol of said sub channel when the first symbol of the burst on a given sub-channel does not fall on the first symbol reserved for payload transmission.

Layer 2 module 42 is then connected to physical layer 43 in which functionalities as beamforming, modulation/demodulation, Forward Error Correction are implemented.

Further, physical layer 43 is connected to the Radio Frequency part of the subscriber station comprising a up/down converter an a amplifier linked to an antenna.

## Claims

1. 1/ Method for improving inter cell interference cancellation in an cellular radio communication system, said cellular radio communication system sending OFDM frames on an air interface, each OFDM frame comprising a pilot tones part and a payload part comprising a plurality of bursts , said method comprising the steps of:
- Sending on a sub channel a first set of pilot tones by the station sending a burst on said sub channel;
- Sending additionally in said frame and on said sub channel a second set of pilot tones by an additional station when a burst sent by said additional station starts on said sub channel.

2. Method according to claim 1, wherein said first set of pilot tones is sent in a first symbol of said sub channel and said second set of pilot tones is sent on a second symbol of said sub channel.

3. Method according to claim 1, wherein the whole or a subset of said first set of pilot tones and the whole or a subset of said second set of second pilot tones are multiplexed on a single symbol of said sub channel.

4. Method according to claim 1, wherein said station is a subscriber station sending bursts in the uplink direction.

5. Method according to claim 1, wherein said station is a base station sending bursts in the downlink direction.

6. Method according to claim 1, wherein said radio communication system is using Orthogonal Frequency Division Multiple Access technology on the air interface, each frame having a time and frequency extension.

7. Method according to claim 1, wherein said pilot tones are comprised in a 3-OFDM-symbol-broad sounding zone on each of said sub channels, one OFDM symbol being used for downlink inter cell interference cancellation according to claim 3 and two OFDM symbols being used for uplink inter cell interference cancellation according to claim 2.

8. Method according to claim 1, wherein said pilot tones are comprised in a 3-OFDM-symbol-broad sounding zone on each of said sub channels, one OFDM symbol used for calculating a frequency response from active subscriber stations in a cell and two OFDM symbols used for uplink inter cell interference cancellation according to claim 2.

9. Method according to claim 1, wherein said radio communication system uses beamforming technology at base stations.

10. Subscriber station adapted to be used in a cellular radio communication system, said cellular radio communication system exchanging OFDM frames on an air interface, each OFDM frame comprising a pilot tones part and a payload part comprising a plurality of bursts , said subscriber station comprising:
- means for detecting if the first symbol of a burst on a given sub-channel falls or not on the first symbol of said payload part;
- means for sending in a predefined symbol of said sub channel a predefined set of pilot tones when the first symbol of said burst starting on a given sub-channel does not fall on the first symbol of said payload part.

11. Subscriber station according to claim 10, further comprising:
- means for sending in a predefined symbol of said sub channel a predefined set of pilot tones when the first symbol of said burst starting on a given sub-channel falls on the first symbol of said payload part.

12. Subscriber station according to claim 10, said subscriber station further comprising:
- means for receiving in a predefined symbol of said sub channel a predefined set of pilot tones when the first symbol of said burst starting on a given sub-channel falls on the first symbol of said payload part and using said pilot tones for adaptive interference cancellation
- means for receiving in a predefined symbol of said sub channel a predefined set of pilot tones when the first symbol of said burst starting on a given sub-channel does not fall on the first symbol of said payload part and using said pilot tones for adaptive interference cancellation.

13. Base station adapted to be used in a cellular radio communication system, said cellular radio communication system exchanging OFDM frames on an air interface, each OFDM frame comprising a pilot tones part and a payload part comprising a plurality of bursts , said base station comprising:
- means for detecting if the first symbol of a burst starting on a given sub-channel falls or not on the first symbol of said payload part;
- means for sending in a predefined symbol of said sub channel a predefined set of pilot tones when the first symbol of said burst starting on a given sub-channel does not fall on the first symbol of said payload part.

14. Base station according to claim 13, further comprising:
- means for sending in a predefined symbol of said sub channel a predefined set of pilot tones when the first symbol of said burst starting on a given sub-channel falls on the first symbol of said payload part.

15. Base station according to claim 13, further comprising:
- means for receiving in a predefined symbol of said sub channel a predefined set of pilot tones when the first symbol of said burst starting on a given sub-channel falls on the first symbol of said payload part and using said pilot tones for adaptive interference cancellation
- means for receiving in a predefined symbol of said sub channel a predefined set of pilot tones when the first symbol of said burst starting on a given sub-channel does not fall on the first symbol of said payload part and using said pilot tones for adaptive interference cancellation.

16. Base station according to claim 13, further comprising:
- means for directing a subscriber station to sent in a predefined symbol of said sub channel a predefined set of pilot tones when the first symbol of said burst starting on a given sub-channel falls on the first symbol of said payload part
- means for directing a subscriber station to sent in a predefined symbol of said sub channel a predefined set of pilot tones when the first symbol of said burst starting on a given sub-channel does not fall on the first symbol of said payload part.
